(19) Europäisches Patentamt
European Patent Office
Office européen des brevets

(11) EP 1 877 531 B1

(12) # EUROPÄISCHE PATENTSCHRIFT

(45) Veröffentlichungstag und Bekanntmachung des Hinweises auf die Patenterteilung:
**13.10.2010 Patentblatt 2010/41**

(21) Anmeldenummer: **06725729.5**

(22) Anmeldetag: **12.04.2006**

(51) Int Cl.:
***C11D 3/37*** *(2006.01)* ***C08G 73/04*** *(2006.01)*

(86) Internationale Anmeldenummer:
**PCT/EP2006/061552**

(87) Internationale Veröffentlichungsnummer:
**WO 2006/108856 (19.10.2006 Gazette 2006/42)**

(54) **AMPHIPHILE WASSERLÖSLICHE ALKOXYLIERTE POLYALKYLENIMINE MIT EINEM INNEREN POLYETHYLENOXIDBLOCK UND EINEM ÄUSSEREN POLYPROPYLENOXIDBLOCK**

AMPHIPHILIC WATER-SOLUBLE ALKOXYLATED POLYALKYLENIMINES WITH AN INTERNAL POLYETHYLENE OXIDE BLOCK AND AN EXTERNAL POLYPROPYLENE OXIDE BLOCK

POLYALKYLENE-IMINES ALCOXYLEES AMPHIPHILES SOLUBLES DANS L'EAU COMPORTANT UN BLOC OXYDE DE POLYETHYLENE INTERIEUR ET UN BLOC OXYDE DE POLYPROPYLENE EXTERIEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.04.2005 US 671493 P**

(43) Veröffentlichungstag der Anmeldung:
**16.01.2008 Patentblatt 2008/03**

(73) Patentinhaber: **BASF SE**
**67056 Ludwigshafen (DE)**

(72) Erfinder:
- **BOECKH, Dieter**
**67117 Limburgerhof (DE)**
- **BITTNER, Christian**
**64625 Bensheim (DE)**
- **MISSKE, Andrea**
**67346 Speyer (DE)**
- **CASADO DOMINGUEZ, Arturo Luis**
**68239 Mannheim (DE)**

(56) Entgegenhaltungen:
**WO-A-00/32727 WO-A-99/01530**
**WO-A-99/67352**

Bemerkungen:
Die Akte enthält technische Angaben, die nach dem Eingang der Anmeldung eingereicht wurden und die nicht in dieser Patentschrift enthalten sind.

EP 1 877 531 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft neue amphiphile wasserlösliche alkoxylierte Polyalkylenimine der allgemeinen Formel I

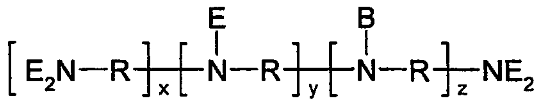

I

in der die Variablen folgende Bedeutung haben:

R gleiche oder verschiedene, lineare oder verzweigte $C_2$-$C_6$-Alkylenreste;
B eine Verzweigung;
E eine Alkylenoxyeinheit der Formel

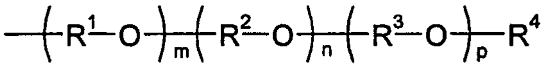

$R^1$ 1,2-Propylen, 1,2-Butylen und/oder 1,2-Isobutylen;
$R^2$ Ethylen;
$R^3$ 1,2-Propylen;
$R^4$ gleiche oder verschiedene Reste: Wasserstoff; $C_1$-$C_4$-Alkyl;
x, y, z jeweils eine Zahl von 2 bis 150, wobei die Summe x+y+z eine Zahl von Alkylen- imineinheiten bedeutet, die einem mittleren Molekulargewicht $M_w$ des Polyalky- lenimins vor der Alkoxylierung von 300 bis 10 000 entspricht;
m eine rationale Zahl von 0 bis 2;
n eine rationale Zahl von 6 bis 18;
p eine rationale Zahl von 3 bis 12, wobei $0{,}8 \leq n/p \leq 1{,}0\ (x+y+z)^{1/2}$ ist,

oder n eine rationale Zahl von 7 bis 15 und p eine rationale Zahl von 4 bis 10 bedeutet, wobei $0{,}9 \leq n/p \leq 0{,}8(x+y+z)^{1/2}$ ist, oder oder n eine rationale Zahl von 8 bis 12 und p eine rationale Zahl von 5 bis 8 bedeutet, wobei $1{,}0 \leq n/p \leq 0{,}6\ (x+y+z)^{1/2}$ ist,
und deren Quaternisierungsprodukte.

Neben Tensiden werden auch Polymere als schmutzablösungsfördernde Zusätze für Wasch- und Reinigungsmittel eingesetzt. Die bekannten Polymere eignen sich z.B. sehr gut als Dispergatoren von Schmutzpigmenten, wie Tonmineralien oder Ruß, und als Additive, die das Wiederablagern von bereits abgelöstem Schutz verhindern. Solche Dispergatoren sind aber, insbesondere bei niedrigen Temperaturen, weitgehend unwirksam bei der Entfernung von Fettschmutz von den Oberflächen.

In der WO-A-99/67352 werden mit peroxidischen Bleichmitteln kompatible Dispergiermittel für hydrophoben Schmutz beschrieben, die das Wiederabsetzen des beim Waschen abgelösten Fettschmutzes auf das gereinigte Textil verhindern sollen und auf alkoxylierten Polyethyleniminen basieren, die einen inneren Polypropylenoxidblock und einen äußeren, deutlich größeren Polyethylenoxidblock aufweisen.

In der US-A-5 565 145 werden als Dispergiermittel für unpolaren partikulären Schmutz ungeladene alkoxylierte Polyethylenimine empfohlen, die bis zu 4 Propylenoxideinheiten pro aktiver NH-Gruppe direkt an das Stickstoffatom gebunden enthalten können. Bevorzugt und beispielhaft belegt sind jedoch Polyethylenimine, die ausschließlich ethoxyliert oder höchstens anpropoxyliert sind, d.h. maximal 1 mol Propylenoxid pro NH-Gruppe aufweisen.

Auch diese alkoxylierten Polyethylenimine sind zwar gute Dispergatoren für hydrophile Schmutzpigmente, zeigen jedoch im Fall von Fettanschmutzungen kein zufriedenstellendes Waschergebnis.

Polyethylenimine, die einen inneren Polyethylenoxidblock und einen äußeren Polypropylenoxidblock aufweisen, sind bislang noch nicht in Wasch- oder Reinigungsmitteln eingesetzt worden.

Aus der US-A-4 076 497 ist die Verwendung von zunächst ethoxylierten und dann propoxylierten Polyethyleniminen, die in Summe mit 30 mol Alkylenoxid und davon mindestens 15 mol Propylenoxid pro mol aktiver NH-Gruppe umgesetzt worden sind, als Hilfsmittel für das Färben von Polyester- und Cellulosefasern mit Dispersionsfarbstoffen bekannt. Die Alkylenoxyketten der erfindungsgemäßen Polyalkylenimine enthalten jedoch höchstens 12 Propylenoxyeinheiten.

In der DE-A-22 27 546 sind neben Polyethyleniminen, die die umgekehrte Alkylenoxidsequenz aufweisen, auch Polyethylenimine, die zunächst ethoxyliert und dann propoxyliert worden sind, als Spalter für Rohölemulsionen beschrieben. Diese Polyethylenimine weisen jedoch im Vergleich zu den erfindungsgemäßen Polyalkyleniminen einen zu hohen Gesamtalkoxylierungsgrad von mindestens 105 mol Alkylenoxid pro mol alkoxylierbarer NH-Gruppe und ein zu großes Molverhältnis von Propylenoxid zu Ethylenoxid von 1,9 bis 4 : 1 (oder umgekehrt ein zu kleines Molverhältnis von Ethylenoxid zu Propylenoxid von 0,53 bis 0,25) auf.

In der JP-A-2003-020585 wird der Einsatz von alkoxylierten Polyethyleniminen in Deinkingprozessen beschreiben. Neben Polyethyleniminen, die vorzugsweise ausschließlich ethoxyliert oder auch zunächst ethoxyliert und dann statistisch mit einem Ethylenoxid/Propylenoxid-Gemisch alkoxyliert sind, wird auch ein Produkt offenbart, das auf einem Polyethylenimin vom mittleren Molekulargewicht $M_w$ 600 basiert und zunächst mit 100 mol Ethylenoxid und dann mit 100 mol Propylenoxid pro mol alkoxylierbarer NH-Gruppe und damit ebenfalls einer sehr viel größeren Menge Alkylenoxid als bei den erfindungsgemäßen Polyalkyleniminen umgesetzt worden ist.

Schließlich sind aus der EP-A-359 034 Hilfsmittel zur Herstellung und Stabilisierung von nichtwäßrigen Pigmentdispersionen bekannt, die auf mindestens zwei Polyalkylenoxidblöcke enthaltenden Polyethyleniminen basieren. Werden Polyethylenimine eingesetzt, die einen äußeren Block aus einem höheren Alkylenoxid aufweisen, so handelt es sich stets um zunächst ethoxylierte und dann butoxylierte Verbindungen, die teilweise einen kleinen Polypropylenoxidzwischenblock enthalten. Polyethylenimine, die einen inneren Polyethylenoxidblock und einen äußeren Polypropylenoxidblock aufweisen, sind stets zusätzlich mit mindestens einem Mol pro mol aktiver NH-Gruppe eines $\alpha$-Olefinoxids ($\alpha$-$C_{12}/C_{14}$-, $C_{16}/C_{18}$- oder $C_{20}$-$C_{28}$-Olefinoxid) umgesetzt.

Der Erfindung lag die Aufgabe zugrunde, Polymere bereitzustellen, die als Zusatz zu Wasch- und Reinigungsmitteln geeignet sind, Fettschmutz von textilen und harten Oberflächen zu entfernen. Insbesondere sollten die Polymere auch bei niedrigen Waschtemperaturen gute fettschmutzablösende Wirkung zeigen.

Demgemäß wurden amphiphile wasserlösliche alkoxylierte Polyalkylenimine der allgemeinen Formel I

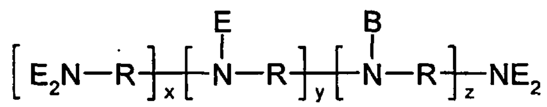

I

in der die Variablen folgende Bedeutung haben:

R  gleiche oder verschiedene, lineare oder verzweigte $C_2$-$C_6$-Alkylenreste;
B  eine Verzweigung;
E  eine Alkylenoxyeinheit der Formel

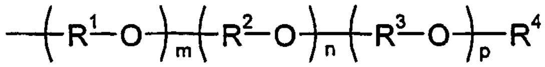

$R^1$  1,2-Propylen, 1,2-Butylen und/oder 1,2-Isobutylen;
$R^2$  Ethylen;
$R^3$  1,2-Propylen;
$R^4$  gleiche oder verschiedene Reste: Wasserstoff; $C_1$-$C_4$-Alkyl;
x, y, z  jeweils eine Zahl von 2 bis 150, wobei die Summe x+y+z eine Zahl von Alkylen- imineinheiten bedeutet, die einem mittleren Molekulargewicht $M_w$ des Polyalky- lenimins vor der Alkylierung von 300 bis 10 000 entspricht;
m  eine rationale Zahl von 0 bis 2;
n  eine rationale Zahl von 6 bis 18;
p  eine rationale Zahl von 3 bis 12, wobei $0{,}8 \leq n/p \leq 1{,}0\ (x+y+z)^{1/2}$ ist,

oder n eine rationale Zahl von 7 bis 15 und p eine rationale Zahl von 4 bis 10 bedeutet, wobei $0{,}9 \leq n/p \leq 0{,}8(x+y+z)^{1/2}$ ist, oder oder n eine rationale Zahl von 8 bis 12 und p eine rationale Zahl von 5 bis 8 bedeutet, wobei $1{,}0 \leq n/p \leq 0{,}6\ (x+y+z)^{1/2}$ ist,
und deren Quaternisierungsprodukte gefunden.

Eine wesentliche Eigenschaft der erfindungsgemäßen alkoxylierten Polyalkylenimine ist ihre Amphiphilie, d.h., sie weisen ein ausbalanciertes Mengenverhältnis von hydrophoben und hydrophilen Strukturelementen auf und sind dadurch einerseits hydrophob genug, um an fettigen Schmutz zu adsorbieren und diesen zusammen mit den Tensiden

und den übrigen waschaktiven Komponenten der Wasch- und Reinigungsmitteln von der zu behandelnden Oberfläche zu entfernen, andererseits aber auch hydrophil genug, um den abgelösten Fettschmutz in der Wasch- und Reinigungsflotte zu halten und sein Wiederabsetzen auf die Oberfläche zu verhindern.

Dieser Effekt wird dadurch erreicht, daß die alkoxylierten Polyalkylenimine einen innen liegenden Polyethylenoxidblock und einen außen liegenden Polypropylenoxidblock aufweisen, Ethoxylierungsgrad und Propoxylierungsgrad dabei spezifische Grenzwerte nicht unter- bzw. überschreiten und ihr Verhältnis mindestens 0,8 beträgt und in einem Bereich liegt, dessen obere Grenze gemäß der empirisch gefundenen Beziehung $n/p \leq 1{,}0\ (x+y+z)^{1/2}$ vom Molekulargewicht des eingesetzten Polyalkylenimins bestimmt wird.

Die erfindungsgemäßen alkoxylierten Polyalkylenimine weisen ein Grundgerüst auf, das durch Alkylenreste R verbundene primäre, sekundäre und tertiäre Aminstickstoffatome in Form folgender Gruppierungen in statistischer Anordnung enthält:

- die Hauptkette und die Seitenketten des Grundgerüsts terminierende primäre Aminogruppierungen, deren Wasserstoffatome anschließend durch Alkylenoxyeinheiten ersetzt werden:

  $[H_2N-R]$ und $-NH_2$

- sekundäre Aminogruppierungen, deren Wasserstoffatom anschließend durch Alkylenoxyeinheiten ersetzt wird:

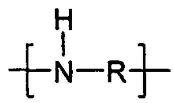

- die Hauptkette und die Seitenketten verzweigende tertiäre Aminogruppierungen:

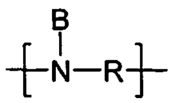

Das Polyalkylenimin weist vor der Alkylierung ein mittleres Molekulargewicht $M_w$ von 300 bis 10 000 auf. Die Summe x+y+z der Wiederholungseinheiten der primären, sekundären und tertiären Aminogruppierungen bedeutet dabei eine diesen Molekulargewichten entsprechende Gesamtzahl von Alkylenimineinheiten.

Bevorzugt beträgt das Molekulargewicht $M_w$ des Polyalkylenimins 500 bis 7500 und besonders bevorzugt 1000 bis 6000.

Bei den die Aminstickstoffatome verbindenden Resten R kann es sich um gleiche oder verschiedene, lineare oder verzweigte $C_2$-$C_6$-Alkylenreste handeln. Bevorzugtes verzweigtes Alkylen ist 1,2-Propylen. Als Alkylenrest R besonders bevorzugt ist Ethylen.

Da bei der Entstehung des Polyalkyleniminggrundgerüsts Cyclisierungen möglich sind, können in geringem Umfang auch cyclische Aminogruppierungen im Grundgerüst enthalten sein, die selbstverständlich wie die nichtcyclischen primären und sekundären Aminogruppierungen alkoxyliert werden.

Die Wasserstoffatome der primären und sekundären Aminogruppen des Polyalkylenimingrundgerüsts sind durch Alkylenoxyeinheiten der Formel

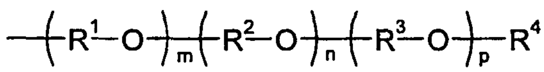

ersetzt.

Die Variablen haben dabei folgende Bedeutung:

$R^1$ 1,2-Propylen, 1,2-Butylen und/oder 1,2-Isobutylen, vorzugsweise 1,2-Propylen;
$R^2$ Ethylen;
$R^3$ 1,2-Propylen;
$R^4$ Wasserstoff oder $C_1$-$C_4$-Alkyl, vorzugsweise Wasserstoff;

m eine rationale Zahl von 0 bis 2; wenn $m \neq 0$ ist, vorzugsweise etwa 1;
n eine rationale Zahl von 6 bis 18;
p eine rationale Zahl von 3 bis 12, wobei $0{,}8 \leq n/p \leq 1{,}0\ (x+y+z)^{1/2}$ ist.

Oder:

n eine rationale Zahl von 7 bis 15;
p eine rationale Zahl von 4 bis 10, wobei $0{,}9 \leq n/p \leq 0{,}8\ (x+y+z)^{1/2}$ ist.

Oder:

n eine rationale Zahl von 8 bis 12;

p eine rationale Zahl von 5 bis 8, wobei $1{,}0 \leq n/p \leq 0{,}6\ (x+y+z)^{1/2}$ ist.

Den wesentlichen Bestandteil dieser Alkylenoxyeinheiten bilden die Ethylenoxyeinheiten $-(R^2\text{-}O)_n-$ und die Propylenoxyeinheiten $-(R^3\text{-}O)_p-$.

Die Alkylenoxyeinheiten können zusätzlich auch einen kleinen Anteil an Propylen- oder Butylenoxyeinheiten $-(R^1\text{-}O)_m-$ aufweisen, d.h., das Polyalkylenimin kann zunächst mit geringen Mengen von bis zu 2 mol, insbesondere 0,5 bis 1,5 mol, vor allem 0,8 bis 1,2 mol, Propylen- oder Butylenoxid pro mol enthaltener NH-Gruppierung umgesetzt, also analkoxyliert werden.

Durch diese Modifizierung des Polyalkylenimins kann erforderlichenfalls die Viskosität des Reaktionsgemischs bei der Alkoxylierung erniedrigt werden. Die Modifizierung beeinflußt die Anwendungseigenschaften des alkoxylierten Polyalkylenimins jedoch in der Regel nicht und stellt daher keine bevorzugte Maßnahme dar.

Schließlich können die erfindungsgemäßen alkoxylierten Polyalkylenimine auch quaternisiert sein. Geeignet ist ein Quaternisierungsgrad von bis zu 50%, insbesondere von 5 bis 40%. Die Quaternisierung erfolgt vorzugsweise durch Einführung von $C_1$-$C_4$-Alkylgruppen und kann in üblicher Weise durch Umsetzung mit entsprechenden Alkylhalogeniden und Dialkylsulfaten vorgenommen werden.

Die Quaternisierung kann von Vorteil sein, um die alkoxylierten Polyalkylenimine an die jeweilige Zusammensetzung des Wasch- und Reingungsmittels, in dem sie eingesetzt werden sollen, anzupassen und bessere Verträglichkeit und/oder Phasenstabilität der Formulierung zu erreichen. Bevorzugt werden die alkoxylierten Polyalkylenimine nicht quaternisiert.

Die erfindungsgemäßen alkoxylierten Polyalkylenimine können auf bekannte Weise hergestellt werden.

Eine bevorzugte Vorgehensweise besteht darin, zunächst in einem ersten Schritt nur eine Analkoxylierung des Polyalkylenimins vorzunehmen.

Dabei wird das Polyalkylenimin nur mit einer Teilmenge des insgesamt eingesetzten Ethylenoxids, die etwa 1 mol Ethylenoxid pro mol NH-Gruppierung entspricht, oder, wenn das Polyalkylenimin zunächst mit bis zu 2 mol Propylenoxid oder Butylenoxid pro mol NH-Gruppierung modifiziert werden soll, auch hier zunächst nur mit bis zu 1 mol dieses Alkylenoxids umgesetzt.

Diese Umsetzung wird in der Regel in Abwesenheit eines Katalysators in wäßriger Lösung bei 70 bis 200°C, vorzugsweise 80 bis 160°C, unter einem Druck von bis zu 10 bar, insbesondere bis zu 8 bar, vorgenommen.

In einem zweiten Schritt erfolgt dann die weitere Alkoxylierung durch aufeinanderfolgende Umsetzung i) mit der restlichen Menge Ethylenoxid bzw. bei einer Modifizierung durch höherem Alkylenoxid im ersten Schritt mit der Gesamtmenge Ethylenoxid und ii) mit Propylenoxid.

Die weitere Alkoxylierung wird üblicherweise in Gegenwart eines basischen Katalysators vorgenommen. Beispiele für geeignete Katalysatoren sind Alkali- und Erdalkalimetallhydroxide, wie Natriumhydroxid, Kaliumhydroxid und Calciumhydroxid, Alkalimetallalkoholate, insbesondere Natrium- und Kalium-$C_1$-$C_4$-alkanolate, wie Natriummethylat, Natriumethylat und Kalium-tert.-butylat, Alkali- und Erdalkalimetallhydride, wie Natriumhydrid und Calciumhydrid, und Alkalimetallcarbonate, wie Natriumcarbonat und Kaliumcarbonat. Bevorzugt sind dabei die Alkalimetallhydroxide und die Alkalimetallalkoholate, wobei Kaliumhydroxid und Natriumhydroxid besonders bevorzugt sind. Übliche Einsatzmengen für die Base liegen bei 0,05 bis 10 Gew.-%, vor allem bei 0,5 bis 2 Gew.-%, bezogen auf die Gesamtmenge an Polyalkylenimin und Alkylenoxid.

Die weitere Alkoxylierung kann in Substanz (Variante a)) oder in einem organischen Lösungsmittel (Variante b)) vorgenommen werden. Die im folgenden angegebenen Verfahrensbedingungen können sowohl für die Ethoxylierung als auch für die nachfolgende Propoxylierung verwendet werden.

Bei der Variante a) wird die im ersten Schritt erhaltene wäßrige Lösung des analkoxylierten Polyalkylenimins nach Zugabe des Katalysators zunächst entwässert. Dies kann in einfacher Weise durch Erhitzen auf 80 bis 150°C und Abdestillieren des Wassers unter vermindertem Druck von 0,01 bis 0,5 bar geschehen. Die anschließende Umsetzung

mit dem Alkylenoxid erfolgt üblicherweise bei 70 bis 200°C, vorzugsweise 100 bis 180°C, und einem Druck von bis zu 10 bar, vor allem bis zu 8 bar, wobei jeweils eine Nachrührzeit von etwa 0,5 bis 4 h bei etwa 100 bis 160°C sowie Druckkonstanz angeschlossen wird.

Als Reaktionsmedium für die Variante b) eignen sich insbesondere unpolare und polare aprotische organische Lösungsmittel. Als Beispiele für besonders geeignete unpolare aprotische Lösungsmittel seien aliphatische und aromatische Kohlenwasserstoffe, wie Hexan, Cyclohexan, Toluol und Xylole, genannt. Beispiele für besonders geeignete polare aprotische Lösungsmittel sind Ether, insbesondere cyclische Ether, wie Tetrahydrofuran und Dioxan, N,N-Dialkylamide, wie Dimethylformamid und Dimethylacetamid, und N-Alkyllactame, wie N-Methylpyrrolidon. Selbstverständlich können auch Mischungen dieser aprotischen Lösungsmittel verwendet werden. Bevorzugte Lösungsmittel sind Xylol und Toluol.

Auch bei der Variante b) wird die im ersten Schritt anfallende Lösung nach Zugabe von Katalysator und Lösungsmittel zunächst entwässert, was vorteilhaft durch Auskreisen des Wassers bei einer Temperatur von 120 bis 180°C, vorzugsweise unterstützt durch einen leichten Stickstoffstrom, geschieht. Die anschließende Umsetzung mit dem Alkylenoxid kann wie bei Variante a) erfolgen.

Bei der Variante a) fällt das alkoxylierte Polyalkylenimin direkt in Substanz an und kann gewünschtenfalls in eine wäßrige Lösung überführt werden. Bei der Variante b) wird das organische Lösungsmittel üblicherweise entfernt und durch Wasser ersetzt. Selbstverständlich kann das Produkt auch in Substanz isoliert werden.

Die erfindungsgemäßen alkoxylierten Polyalkylenimine weisen als 1 gew.-%ige Lösung in destilliertem Wasser einen Trübungspunkt von in der Regel ≤ 70°C, bevorzugt ≤ 65°C auf. Besonders bevorzugt liegt der Trübungspunkt im Bereich von 25 bis 55°C.

Die erfindungsgemäßen alkoxylierten Polylalkylenimine eignen sich hervorragend als schmutzablösungsfördernder Zusatz für Wasch- und Reinigungsmittel. Dabei zeigen sie insbesondere bei Fettschmutz hohe ablösende Wirkung. Von besonderem Vorteil ist, daß sie die schmutzablösende Wirkung bereits bei niedrigen Waschtemperaturen entfalten.

Die erfindungsgemäßen alkoxylierten Polyalkylenimine können den Wasch- und Reinigungsmitteln in Mengen von im allgemeinen 0,05 bis 10 Gew.-%, bevorzugt 0,1 bis 5 Gew.-% und besonders bevorzugt 0,25 bis 2,5 Gew.-%, bezogen auf die jeweilige Gesamtzusammensetzung, zugesetzt werden.

Daneben enthalten die Wasch- und Reinigungsmittel in der Regel Tenside und gegebenenfalls weitere Polymere als waschaktive Substanzen, Builder und weitere übliche Inhaltsstoffe, z.B. Cobuilder, Komplexbildner, Bleichmittel, Stellmittel, Vergrauungsinhibitoren, Farbübertragungsinhibitoren, Enzyme und Parfumstoffe.

## Beispiele

### I. Herstellung von erfindungsgemäßen alkoxylierten Polyalkyleniminen

#### Beispiel 1

Anethoxylierung

In einem 2 I-Autoklav wurden 900 g einer 50 gew.-%igen wäßrigen Lösung von Polyethylenimin 5000 (mittleres Molekulargewicht $M_w$ von 5000) auf 80°C erwärmt und dreimal mit Stickstoff bis zu einem Druck von 5 bar gespült. Nach Temperaturerhöhung auf 90°C wurden 461 g Ethylenoxid bis 5 bar zudosiert. Es wurde 1 h bei 90°C unter einem konstanten Druck von 5 bar nachgerührt. Flüchtige Anteile wurden durch Strippen mit Stickstoff entfernt.

Es wurden 1345 g einer 68 gew.-%igen wäßrigen Lösung eines Polyethylenimins 5000 erhalten, das 1 mol Ethylenoxid pro mol NH-Bindung enthielt.

a) Ethoxylierung und Propoxylierung in Substanz

In einem 2 I-Autoklav wurde ein Gemisch aus 163 g der bei der Anethoxylierung erhaltenen wäßrigen Lösung und 13,9 g einer 40 gew.-%igen wäßrigen Kaliumhydroxidlösung auf 70°C erwärmt. Nach dreimaligem Spülen mit Stickstoff bis zu einem Druck von 5 bar wurde das Gemisch 4 h bei 120°C und einem Vakuum von 10 mbar entwässert. Anschließend wurden 506 g Ethylenoxid bei 120°C bis zu einem Druck von 8 bar zudosiert. Es wurde 4 h bei 120°C und 8 bar nachgerührt. Nach Entspannen und Spülen mit Stickstoff wurden 519 g Propylenoxid bei 120°C bis zu einem Druck von 8 bar zudosiert. Es wurde erneut 4 h bei 120°C und 8 bar nachgerührt. Flüchtige Anteile wurden durch Strippen mit Stickstoff entfernt.

Es wurden 1178 g eines Polyethylenimins 5000, das pro mol NH-Bindung 10 mol Ethylenoxid und 7 mol Propylenoxid enthielt, in Form einer hellbraunen viskosen Flüssigkeit erhalten (Amintiter: 0,9276 mmol/g; pH-Wert einer 1 gew.-%igen wäßrigen Lösung: 10,67).

b) Ethoxylierung und Propoxylierung in Xylol

In einem 2 l-Autoklav wurde ein Gemisch aus 137 g der bei der Anethoxylierung erhaltenen wäßrigen Lösung, 11,8 g einer 40 gew.-%igen wäßrigen Kaliumhydroxidlösung und 300 g Xylol dreimal mit Stickstoff bis zu einem Druck von 5 bar gespült. Bei einer Manteltemperatur von 175°C wurde das enthaltene Wasser in 4 h über einen Wasserauskreiser unterstützt durch einen leichten Stickstoffstrom ausgekreist. Anschließend wurden 428 g Ethylenoxid bei 120°C bis zu einem Druck von 3 bar zudosiert. Es wurde 2 h bei 120°C unter einem konstanten Druck von 3 bar nachgerührt. Dann wurden 439 g Propylenoxid bei 120°C bis zu einem Druck von 3 bar zudosiert. Es wurde 3 h bei 120°C und 3 bar nachgerührt. Nach Entfernen des Lösungsmittels unter einem Vakuum von 10 mbar wurde das Alkoxylierungsprodukt 3 h mit 4 bar Wasserdampf bei 120°C gestrippt.

Es wurden 956 g eines Polyethylenimins 5000, das pro mol NH-Bindung 10 mol Ethylenoxid und 7 mol Propylenoxid enthielt, in Form einer hellbraunen viskosen Flüssigkeit erhalten (Amintiter: 0,9672 mmol/g; pH-Wert einer 1 gew.-%igen wäßrigen Lösung: 10,69).

Beispiel 2

In einem 2 l-Autoklav wurde ein Gemisch aus 321 g einer 69,2 gew.-%igen wäßrigen Lösung eines Polyethylenimins 5000 (1 mol Ethylenoxid pro mol NH-Bindung), die bei Anethoxylierung analog Beispiel 1 erhalten wurde, und 28 g einer 40 gew.-%igen wäßrigen Kaliumhydroxidlösung auf 80°C erwärmt. Nach dreimaligem Spülen mit Stickstoff bis zu einem Druck von 5 bar wurde das Gemisch 3 h bei 120°C und einem Vakuum von 10 mbar entwässert. Anschließend wurden 1020 g Ethylenoxid bei 120°C bis zu einem Druck von 8 bar zudosiert. Dann wurde 4 h bei 120°C und 8 bar nachgerührt. Flüchtige Anteile wurden durch Strippen mit Stickstoff entfernt.

Es wurden 1240 g eines Polyethylenimins 5000, das 9,9 mol Ethylenoxid pro mol NH-Bindung enthielt, in Form einer braunen viskosen Lösung erhalten (Amintiter: 1,7763 mmol/g; pH-Wert einer 1 gew.-%igen wäßrigen Lösung: 11,3).

239 g des Ethoxylierungsprodukts wurden dann nach dreimaligem Spülen mit Stickstoff bis zu einem Druck von 5 bar bei 120°C mit ca. 87 g Propylenoxid (Messgenauigkeit +/-15 g) bis zu einem Druck von 8 bar umgesetzt. Dann wurde 4 h bei 120°C und 8 bar nachgerührt. Flüchtige Anteile wurden durch Strippen mit Stickstoff entfernt.

Es wurden erhält 340 g eines Polyethylenimins 5000, das pro mol NH-Bindung 9,9 mol Ethylenoxid und 3,5 mol Propylenoxid enthielt, in Form einer hellbraunen viskosen Flüssigkeit erhalten (Amintiter: 1,2199 mmol/g; pH-Wert einer 1 gew.-%igen wäßrigen Lösung: 11,05).

Beispiel 3

Anethoxylierung

In einem 2 l-Autoklav wurde ein Gemisch aus 516 g Polyethylenimin 600 (mittleres Molekulargewicht $M_w$ von 600) und 10,3 g Wasser dreimal mit Stickstoff bis zu einem Druck von 5 bar gespült und auf 90°C erwärmt. Dann wurden 528 g Ethylenoxid bei 90°C zudosiert. Es wurde 1 h bei 90°C unter einem konstanten Druck von 5 bar nachgerührt. Flüchtige Anteile (insbesondere Wasser) wurden durch Strippen mit Stickstoff entfernt.

Es wurden 1040 g eines Polyethylenimins 600 in Form einer braunen Flüssigkeit erhalten, das 1 mol Ethylenoxid pro mol NH-Bindung enthielt.

Ethoxylierung und Propoxylierung in Substanz

In einem 2 l-Autoklav wurde ein Gemisch aus 86 g des anethoxylierten Polyethylenimins 600 und 10,8 g einer 40 gew.-%igen wäßrigen Kaliumhydroxidlösung auf 80°C erwärmt. Nach dreimaligem Spülen mit Stickstoff bis zu einem Druck von 5 bar wurde das Gemisch 2,5 h bei 120°C und einem Vakuum von 10 mbar entwässert. Nach Aufheben des Vakuums mit Stickstoff wurden 384 g Ethylenoxid bei 120°C zudosiert. Es wurde 2 h bei 120°C nachgerührt. Nach Entspannen und Spülen mit Stickstoff wurden 393 g Propylenoxid bei 120°C zudosiert. Es wurde erneut 2 h bei 120°C nachgerührt. Flüchtige Anteile wurden durch Strippen mit Stickstoff entfernt.

Es wurden 865 g eines Polyethylenimins 600, das pro mol NH-Bindung 10 mol Ethylenoxid und 7 mol Propylenoxid enthielt, in Form einer hellbraunen viskosen Flüssigkeit erhalten (Amintiter: 1,0137 mmol/g; pH-Wert einer 1 gew.-%igen wäßrigen Lösung: 11,15).

Beispiel 4

Zu 300 g des unter Stickstoff bei 60°C gerührten, in Beispiel 1b) erhaltenen alkoxylierten Polyethylenimins 5000 wurden 7,3 g Dimethylsulfat zugetropft. Dabei stieg die Temperatur auf 70°C. Nach dreistündigem Nachrühren

bei 70°C wurde auf Raumtemperatur abgekühlt.

Es wurden 307 g eines Polyethylenimins 5000, das pro mol NH-Bindung 10 mol Ethylenoxid und 7 mol Propylenoxid enthielt und einen Quaternisierungsgrad von 22% aufwies, in Form einer braunen viskosen Flüssigkeit erhalten (Amintiter: 0,7514 mmol/g).

II. Anwendung von erfindungsgemäßen alkoxylierten Polyalkyleniminen bei der Wäsche

Zur Prüfung ihrer schmutzablösungsfördernden Wirkung wurden die alkoxylierten Polyalkylenimine in drei Versuchsreihen zusammen mit den in Tabelle 1 genannten Tensiden und Buildern als Modellwaschmitteln oder einem auf dem Markt erhältlichen Waschmittel der Waschflotte zugesetzt. Die in Tabelle 2 aufgeführten Testgewebe wurden dann unter den in Tabelle 3a, 4a und 5a genannten Waschbedingungen gewaschen.

Die Schmutzablösung von den Testgeweben wurde bestimmt, indem die Testgewebe vor und nach der Wäsche einer Reflexionsmessung bei 460 nm unterzogen wurden.

Die Schmutzentfernung wurde aus den Remissionswerten R vor und nach der Wäsche sowie dem Remissionswert eines weißen Referenz-Baumwollgewebes gemäß der folgenden Formel in % ermittelt:

$$\text{Schmutzentfernung [\%]} = \frac{\text{R (nach der Wäsche) - R (vor der Wäsche)}}{\text{R (weiße Baumwolle) - R (vor der Wäsche)}} \times 100$$

Alle Wäschen wurden 2 x durchgeführt. Die bei den Waschergebnissen in den Tabellen 3b, 4b und 5b aufgeführten Werte für die Schmutzentfernung entsprechen dem Durchschnitt der unter den gleichen Bedingungen erhaltenen Meßwerte. Zum Vergleich sind die jeweils ohne Polymerzusatz erhaltenen Werte angegeben.

Alle Angaben zu den Einsatzmengen sind auf 100% Aktivsubstanz bezogen.

Tabelle 1: Tenside und Builder

| | |
|---|---|
| Tensid 1 | Lutensit® A-LBN 50 (BASF; linerares $C_{12}$-Alkylbenzolsulfonat (Na-Salz)) |
| Tensid 2 | Plurafac® LF 401 (BASF; Fettalkoholalkoxylat) |
| Builder | Natriumtripolyphosphat |

Tabelle 2: Testgwebe

| | |
|---|---|
| TG 1 | Triolein, gefärbt mit Sudanrot: Fleck von 0,2 g auf 5 g weißem Baumwollgewebe |
| TG 2 | Olivenöl, gefärbt mit Sudanrot: Fleck von 0,2 g auf 5 g weißem Baumwollgewebe |
| TG 3 | WFK 10D (Hautfett/Pigment-Schmutzgewebe von WFK*) |
| TG 4 | EMPA 118 (Hautfett/Pigment-Schmutzgewebe von EMPA**) |
| TG 5 | Scientific Services Sebum (Hautfett/Pigment-Schmutzgewebe von Scientific Services***) |
| TG 6 | WFK 10PF (Pflanzenfett/Pigment-Schmutzgewebe von WFK) |
| TG 7 | CFT-CS10 (gefärbte Butter auf Baumwollgewebe von CFT****) |
| TG 8 | CFT-CS 62 (gefärbtes Schweineschmalz auf Baumwollgewebe von CFT) |
| | |
| * | Forschungsinstitut für Reinigungstechnologie e.V., Krefeld |
| ** | Eidgenössische Materialprüfungs- und Forschungsanstalt, St. Gallen, CH |
| *** | Scientific Services S/D, Inc., Sparrow Bush, NY, USA |
| **** | Center For Testmaterials BV, Vlaardingen, NL |

Tabelle 3a: Waschbedingungen

| | |
|---|---|
| Gerät | Launder-o-meter (Fa. Atlas, Chicago, USA) |
| Waschtemperatur | 25°C |
| Dosierung Polymer | 30 mg/l |
| Waschmittel | Modellwaschmittel aus Tensid 1 / Builder |
| Tensiddosierung | 300 mg/l |
| Builderdosierung | 200 mg/l |
| Wasserhärte | 2,5 mmol/l Ca : Mg 3 : 1 |
| Flottenverhältnis | 1 : 12,5 |
| Waschdauer | 30 min |
| Testgewebe | TG 1 und TG 2<br>Die Testgewebe wurden jeweils getrennt mit weiteren 5 g weißem Baumwollgewebe je Büchse gewaschen. |

Tabelle 3b: Waschergebnisse

| Polymer | Schmutzentfernung [%] | |
|---|---|---|
| | TG 1 | TG 2 |
| aus Beispiel 3 | 42,6 | 38,4 |
| ohne Zusatz | 38,5 | 32,4 |

Tabelle 4a: Waschbedingungen

| | |
|---|---|
| Gerät | Launder-o-meter (Fa. Atlas, Chicago, USA) |
| Waschtemperatur | 25°C |
| Dosierung Polymer | 25 mg/l |
| Waschmittel | Modellwaschmittel aus Tensid 1 / Tensid 2 |
| Dosierung Tensid 1 | 150 mg/l |
| Dosierung Tensid 2 | 50 mg/l |
| Wasserhärte | 1,0 mmol/l Ca : Mg 3 : 1 |
| Flottenverhältnis | 1 : 12,5 |
| Waschdauer | 30 min |
| Testgewebe | TG 3, TG 4, TG 6, TG 7 und TG 8<br>Die Schmutzgewebe wurden jeweils auf 4 x 4 cm zugeschnitten und auf weiße Baumwolle aufgenäht. Es wurden jeweils 2 Baumwollgewebe mit aufgenähtem TG 3-, TG 4- und TG 6-Gewebe sowie 2 Baumwollgewebe mit aufgenähtem TG 7- und TG 8-Gewebe zusammen gewaschen. Jeder Wäsche wurden weitere 5 g weißes Baumwollgewebe zugegeben. |

Tabelle 4b: Waschergebnisse

| Polymer | Schmutzentfernung [%] | | | | |
|---|---|---|---|---|---|
| | TG 3 | TG 4 | TG 6 | TG 7 | TG 8 |
| aus Beispiel 3 | 29,7 | 8,2 | 48,1 | 6,6 | 3,9 |

(fortgesetzt)

| Polymer | Schmutzentfernung [%] | | | | |
|---|---|---|---|---|---|
| | TG 3 | TG 4 | TG 6 | TG 7 | TG 8 |
| ohne Zusatz | 29,4 | 6,8 | 47,4 | 5,9 | 2,5 |

Tabelle 5a: Waschbedingungen

| | |
|---|---|
| Gerät | Launder-o-meter (Fa. Atlas, Chicago, USA) |
| Waschtemperatur | 25°C |
| Dosierung Polymer | (1) 20 mg/l; (2) 40 mg/l |
| Waschmittel | Tide flüssig (Procter & Gamble) |
| Waschmitteldosierung | 1 g/l |
| Wasserhärte | 1,0 mmol/l Ca : Mg 3 : 1 |
| Flottenverhältnis | 1 : 12,5 |
| Waschdauer | 30 min |
| Testgewebe | TG 3, TG 4, TG 5 und TG 6<br>Die Schmutzgewebe wurden jeweils auf 4 x 4 cm zugeschnitten und auf weiße Baumwolle aufgenäht. Es wurden jeweils 2 Baumwollgewebe mit aufgenähtem Schmutzgewebe zusammen gewaschen. Jeder Wäsche wurden weitere 5 g weißes Baumwollgewebe zugegeben |

Tabelle 5b: Waschergebnisse

| Polymer | Schmutzentfernung [%] | | | |
|---|---|---|---|---|
| | TG 3 | TG 4 | TG 5 | TG 6 |
| aus Beispiel 3 (20 mg/l) | 39,6 | 7,6 | 31,4 | 50,0 |
| aus Beispiel 3 (40 mg/l) | 40,2 | 8,2 | 32,1 | 50,6 |
| ohne Zusatz | 37,2 | 5,4 | 28,5 | 44,4 |

Die Ergebnisse der Waschversuche zeigen, daß durch Zusatz der erfindungsgemäßen alkoxylierten Polyalkylenimine die Schmutzablösung von fett- und ölartigen Anschmutzungen von Baumwollgebe deutlich verbessert wird.

**Patentansprüche**

1. Amphiphile wasserlösliche alkoxylierte Polyalkylenimine der allgemeinen Formel I

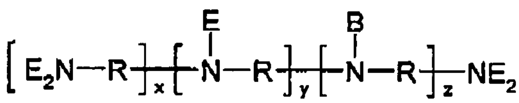 I

in der die Variablen folgende Bedeutung haben:

R gleiche oder verschiedene, linear oder verzweigte $C_2$-$C_8$-Alkylenreste;
B eine Verzweigung;
E eine Alkylenoxyeinheit der Formel

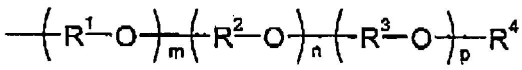

$R^1$ 1,2-Propylen, 1,2-Butylen und/oder 1,2-Isobutylen;
$R^2$ Ethylen;
$R^3$ 1,2-Propylen;
$R^4$ gleiche oder verschiedene Reste: Wasserstoff; $C_1$-$C_4$-Alkyl;
x, y, z jeweils eine Zahl von 2 bis 150, wobei die Summe x+y+z eine Zahl von Alkylenimineinheiten bedeutet, die einem mittleren Molekulargewicht $M_w$ des Polyalkylenimins vor der Alkoxylierung von 300 bis 10 000 entspricht;
m eine rationale Zahl von 0 bis 2;
n eine rationale Zahl von 6 bis 18;
p eine rationale Zahl von 3 bis 12, wobei $0,8 \leq n/p \leq 1,0\ (x+y+z)^{1/2}$ ist,

oder eine rationale Zahl von 7 bis 15 und p eine rationale Zahl von 4 bis 10 bedeutet, wobei $0.9 \leq n/p \leq 0,8\ (x+y+z)^{1/2}$ ist, oder n eine rationale Zahl von 8 bis 12 und p eine rationale Zahl von 5 bis 8 bedeutet, wobei $1,0 \leq n/p \leq 0,6\ (x+y+z)^{1/2}$ ist,
und deren Quaternisierungsprodukte.

2. Alkoxylierte Polylalkylenimine nach Anspruch 1, bei denen R Ethylen bedeutet.

3. Alkoxylierte Polyalkylenimine nach Anspruch 1 oder 2, bei denen $R^4$ Wasserstoff bedeutet.

4. Alkoxylierte Polyalkylenimine nach den Ansprüchen 1 bis 3, bei denen die Summe x+y+z eine Zahl von Alkylenimineinheiten bedeutet, die einem mittleren Molekulargewicht $M_w$ des Polyalkylenimins vor der Alkoxylierung von 500 bis 7500 entspricht.

5. Alkoxylierte Polyalkylenimine nach den Ansprüchen 1 bis 4, bei denen die Summe x+y+z eine Zahl von Alkylenimineinheiten bedeutet, die einem mittleren Molekulargewicht $M_w$ des Polyalkylenimins vor der Alkoxylierung von 1000 bis 6000 entspricht.

6. Alkoxylierte Polyalkylenimine nach den Ansprüchen 1 bis 5, bei denen bis zu 50% der enthaltenen Stickstoffatome quaternisiert sind.

7. Alkoxylierte Polyalkylenimine nach den Ansprüchen 1 bis 6, bei denen m 0 bedeutet.

## Claims

1. An amphiphilic water-soluble alkoxylated polyalkylenimine of the general formula I

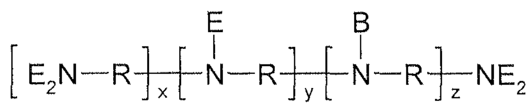

I

in which the variables are each defined as follows:

R are identical or different, linear or branched $C_2$-$C_6$-alkylene radicals;
B is a branch;
E is an alkylenoxy unit of the formula

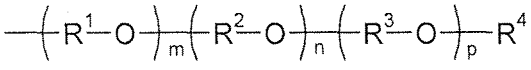

$R^1$ is 1,2-propylene, 1,2-butylene and/or 1,2-isobutylene;
$R^2$ is ethylene;
$R^3$ is 1,2-propylene;
$R^4$ are identical or different radicals: hydrogen; $C_1$-$C_4$-alkyl;
x, y, z are each from 2 to 150, where the sum of x+y+z means a number of alkylenimine units which corresponds to an average molecular weight $M_w$ of the polyalkylenimine before the alkoxylation of from 300 to 10 000;
m is a rational number from 0 to 2;
n is a rational number from 6 to 18;
p is a rational number from 3 to 12, where $0.8 \leq n/p \leq 1.0\ (x+y+z)^{1/2}$;

or n is a rational number from 7 to 15 and p is a rational number from 4 to 10, where $0.9 \leq n/p \leq 0.8\ (x+y+z)^{1/2}$, or n is a rational number from 8 to 12 and p is a rational number from 5 to 8, where $1.0 \leq n/p \leq 0.6\ (x+y+z)^{1/2}$,
and quaternization products thereof.

2. The alkoxylated polyalkylenimine according to claim 1 in which R is ethylene.

3. The alkoxylated polyalkylenimine according to claim 1 or 2 in which $R^4$ is hydrogen.

4. The alkoxylated polyalkylenimine according to claims 1 to 3 in which the sum of x+y+z means a number of alkylenimine units which corresponds to an average molecular weight $M_w$ of the polyalkylenimine before the alkoxylation of from 500 to 7500.

5. The alkoxylated polyalkylenimine according to claims 1 to 4 in which the sum of x+y+z means a number of alkylenimine units which corresponds to an average molecular weight $M_w$ of the polyalkylenimine before the alkoxylation of from 1000 to 6000.

6. The alkoxylated polyalkylenimine according to claims 1 to 5 in which up to 50% of the nitrogen atoms present are quaternized.

7. The alkoxylated polyalkylenimine according to claims 1 to 6 in which m is 0.

## Revendications

1. Polyalkylène-imines alcoxylées amphiphiles, hydrosolubles, de formule générale I

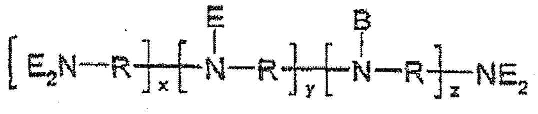 I

dans laquelle les variables ont les significations suivantes :

R représente des radicaux alkylène en $C_2$-$C_8$ linéaires ou ramifiés, identiques ou différents ;
B représente une ramification ;
E représente un motif oxyalkylène de formule

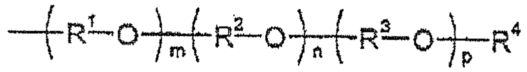

$R^1$ représente un radical 1,2-propylène, 1,2-butylène et/ou 1,2-isobutylène ;
$R^2$ est l'éthylène ;
$R^3$ est le 1,2-propylène ;
$R^4$ représente des radicaux identiques ou différents : hydrogène ; alkyle en $C_1$-$C_4$ ;
x, y, z représentent chacun un nombre valant de 2 à 150, la somme x+y+z représentant un nombre de motifs alkylène-imine qui correspond à une masse moléculaire moyenne $M_w$ de la polyalkylène- imine, avant l'alcoxylation, de 300 à 10 000 ;
m représente un nombre rationnel valant de 0 à 2 ;
n représente un nombre rationnel valant de 6 à 18 ;
p représente un nombre rationnel valant de 3 à 12, où $0,8 \leq n/p \leq 1,0\ (x+y+z)^{1/2}$,

ou n représente un nombre rationnel valant de 7 à 15 et p représente un nombre rationnel valant de 4 à 10, où $0,9 \leq n/p \leq 0,8\ (x+y+z)^{1/2}$,
ou n représente un nombre rationnel valant de 8 à 12 et p représente un nombre rationnel valant de 5 à 8, où $1,0 \leq n/p \leq 0,6\ (x+y+z)^{1/2}$,
et leurs produits de quaternisation.

**2.** Polyalkylène-imines alcoxylées selon la revendication 1, dans lesquelles R représente l'éthylène.

**3.** Polyalkylène-imines alcoxylées selon la revendication 1 ou 2, dans lesquelles $R^4$ représente un atome d'hydrogène.

**4.** Polyalkylène-imines alcoxylées selon les revendications 1 à 3, dans lesquelles la somme x+y+z représente un nombre de motifs alkylène-imine qui correspond à une masse moléculaire moyenne $M_w$ de la polyalkylène-imine, avant l'alcoxylation, de 500 à 7 500.

**5.** Polyalkylène-imines alcoxylées selon les revendications 1 à 4, dans lesquelles la somme x+y+z représente un nombre de motifs alkylène-imine qui correspond à une masse moléculaire moyenne $M_w$ de la polyalkylène-imine, avant l'alcoxylation, de 1 000 à 6 000.

**6.** Polyalkylène-imines alcoxylées selon les revendications 1 à 5, dans lesquelles jusqu'à 50 % des atomes d'azote contenus sont rendus quaternaires.

**7.** Polyalkylène-imines alcoxylées selon les revendications 1 à 6, dans lesquelles m représente 0.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9967352 A
- US 5565145 A
- US 4076497 A
- DE 2227546 A
- JP 2003020585 A
- EP 359034 A